# EUROPEAN PATENT APPLICATION

(11) **EP 1 398 752 A1**
(43) Date of publication of application: **17.03.2004**
(21) Application number: 01974683.3
(22) Date of filing: 04.10.2001
(51) Int. Cl.: G09B 19/24, A61H 9/00

(54) **METHOD FOR MANUFACTURING PET MODEL FOR TRAINING OF TRIMMING**

(71) Applicant: Petmann Co. ltd., Kowloon, Hong Kong (CN)
(72) Inventor: Jeremy, Cheung, Hong Kong (CN)
(74) Representative: Leson, Thomas Johannes Alois, Dipl.-Ing.
(86) International application number: PCT/JP2001/008748
(87) International publication number: WO 2003/032280

(57) **Abstract**

The present invention provides a method for manufacturing a pet model for practicing trimming, in a pet model in which a body hair is flocked on the pet model body formed by pouring dissolved synthetic resin into a mold, the body being constituted by a head portion and the trunk body including four legs, the method including the steps of: pouring the dissolved synthetic resin into a mold to mold it; packing chaff such as grain into the molded body to fix a shape; flocking the body hair on the body with a crochet needle; injecting a hot charge having adhesive properties formed of gluey resin or the like having expansion properties into the body; and assembling the head portion and the trunk portion to join them, characterized in that the flocked body hair is adhered to the body firmly from inside of the body, and the injected gluey hot charge is expanded and coagulated to thereby form the constructional body of the body and to form the same type of a pet model as the mold.

## Description

### TECHNICAL FIELD

The present invention relates to a method for manufacturing a pet model for practicing trimming, which can be used as a practicing bed for shearing hair of a pet by an expert called a trimmer whose occupation is to shear hair of a pet such as a dog to arrange its shape, or a trainee aimed at a trimmer.

### BACKGROUND ART

According to the conventional pet model for practicing trimming, the pet model is manufactured flocking or pasting a body hair of a dog or the like to the body of hard material formed of synthetic resin, wood and the like, and the body is covered with a cover having a body hair flocked.

### DISCLOSURE OF INVENTION

As described above, the conventional pet model is manufactured by a method for flocking or pasting an artificial body hair of a dog or the like on the body of hard material such as plastics or wood. For flocking, the technique for effecting flocking on a solid with strong force has been necessary. Further, according to the method by way of pasting or the like, it is difficult to reproduce a natural body hair of a pet, which has not been enough to obtain an effect of training of trimming. Furthermore, for reproducing natural arrangement of hair of a pet, an engineer requiring high skill or expenses for preparing tools or the like are necessary, resulting in high manufacturing costs.

It is therefore an object of the present invention to provide a pet model which is easily manufactured by a manufacturing method comprising: molding the body of a pet model such as a dog with soft resin, flocking on the soft body, and thereafter hardening the body from inside thereof with glue or the like to arrange it into a shape of a pet.

In view of the aforementioned problem, according to the present invention, there is provided a method for manufacturing a pet model for practicing trimming, in a pet model in which a body hair is flocked on the pet model body formed by pouring dissolved synthetic resin into a mold, the body being constituted by a head portion and the trunk body including four legs, the method including the steps of: pouring the dissolved synthetic resin into a mold to mold it; packing chaff such as grain into the molded body to fix a shape; flocking the body hair on said body with a crochet needle; pulling out the chaff within the body after the flocking; injecting a hot charge having adhesive properties formed of gluey resin or the like having expansion properties into the body; and assembling the head portion and the trunk portion to join them, characterized in that the flocked body hair is adhered to the body firmly from inside of the body, and the injected adhesive is expanded and coagulated to thereby form the constructional body of the body and to form the same type of a pet model as the mold.

In the manufacture of a pet model for practicing trimming according to the present invention, in molding the body, the head portion and the trunk portion are molded separately. The synthetic resin for molding the body is a synthetic resin such as polyvinyl chloride. The synthetic resin for forming the body is heated at a high temperature with a gluey synthetic resin material formed from polyvinyl chloride thereby being hardened to be rubbery.

Further, the chaff of grain to be packed into the body to make carrying out said flocking step easy are husks of grain such as rice, wheat, buckwheat and the like.

The body hair of a pet to be flocked is a twisted woolen yarn having a fixed length.

The present invention relates to a method for manufacturing a pet model for practicing trimming wherein after the flocking. a gluey hot charge having adhesive properties injected into the body is expanded after injection to fill the interior of the body, and hardened to form a constructional body of the body.

### BRIEF DESCRIPTION OF THE DRAWINGS

FIG. 1 shows a side view of the body of a dog in an example of a pet model for practicing trimming according to the present invention.
FIG. 2 shows a side view showing a head portion of a pet model molded according to the present invention.
FIG. 3 shows a side view showing a trunk portion of a pet model molded according to the present invention.
FIG. 4 is a sectional view showing the conditions that part of a rubber dog is enlarged and woolen yarns are flocked according to the present invention.
FIG. 5 is a sectional view of a dog molded by injecting a gluey hot charge into the trunk portion of a rubber dog according to the present invention.
FIG. 6 shows a view of a practicing pet model in which flocked woolen yarns are molded.

### BEST MODE FOR CARRYING OUT THE INVENTION

Examples of the form for carrying out a method for manufacturing a pet model for practicing trimming according to the present invention will be explained hereinafter with reference to the drawings. In the present embodiment, an explanation will be made taking, as an example, a pet model for practicing trimming of a dog.

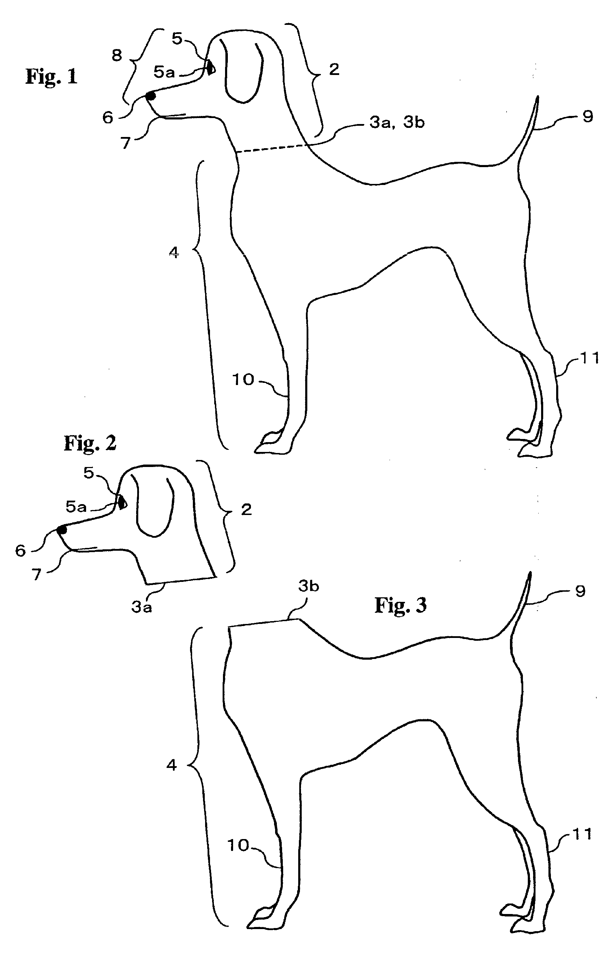

FIG. 1 shows a side view of the body of a dog in an example of a pet model for practicing trimming.

A pet model for practicing trimming according to the present invention is manufactured by the method descried below.

First, liqueous soft gluey resin comprised of polyvinyl chloride (PVC) and the like is poured into a mold having a shape of a pet model. While a material for the mold is iron in the present embodiment, copper or other metals may be used. Then, it is charged into a heating device for heating the mold into which the gluey resin was poured.

The soft gluey resin is heated to a high temperature within the heating device for heating the poured gluey resin to a high temperature so that the former is chemically changed from liqueous to rubbery solid-shaped article. After the mold is taken out of the heating device to lower a temperature thereof, the resin formed to be soft rubbery that changed in state from the mold is taken out.

The resin changed into the rubbery solid article has the same shape of a pet model as the mold. At this time, the rubbery resin has a shape of a dog which is a pet model. The rubbery resin of the body 1 having the shape of a dog is called a rubber dog. This body 1 will be suitably called the rubber dog hereinafter. In the pet model, normally, a head portion 2 and a trunk portion 4 are separately molded by respective molds.

FIG. 2 is a side view showing a head portion 2 of a pet model molded. FIG. 3 is a side view showing a trunk portion 4 of a pet model molded. After the pet model has been molded by applying flocking to the head portion 2 and the trunk portion 4 separately formed as described, respective joining portions 3a and 3b are joined to complete them as a pet model.

In case a dog of different colors is demanded by clients, various parts of the dog are colored with different colors. For example, there are colors of an eye 5, the pupil 5a, a nose 6, a face 8, and a mouth 7.

Soft twisted woolen yarns 15 are prepared to be used as a body hair of a pet model. The woolen yarns 15 are cut and arranged into the fixed standard length, and are bundled as the same standard. The length of the woolen yarns which are used as the body hair is set to be longer than the body hair of an ordinary dog so as to enable trimming practicing.

Next, the operation for flocking the woolen yarns 15 on the rubber dog 1 in the present invention will be explained. First, chaff is put into the soft rubber dog 1 molded previously. The rubber dog has a soft rubbery shape as explained previously. Therefore, it is so swollen as not keep a dog's shape. In that condition, the flocking operation of woolen yarns is not easy and the operating efficiency is also poor.

In the present invention, chaff 25 is packed into the body of the molded rubber dog 1 to harden the rubber dog 1 so as to arrange it to a shape of a pet such as a dog. This facilitates flocking operation for planting woolen yarns.

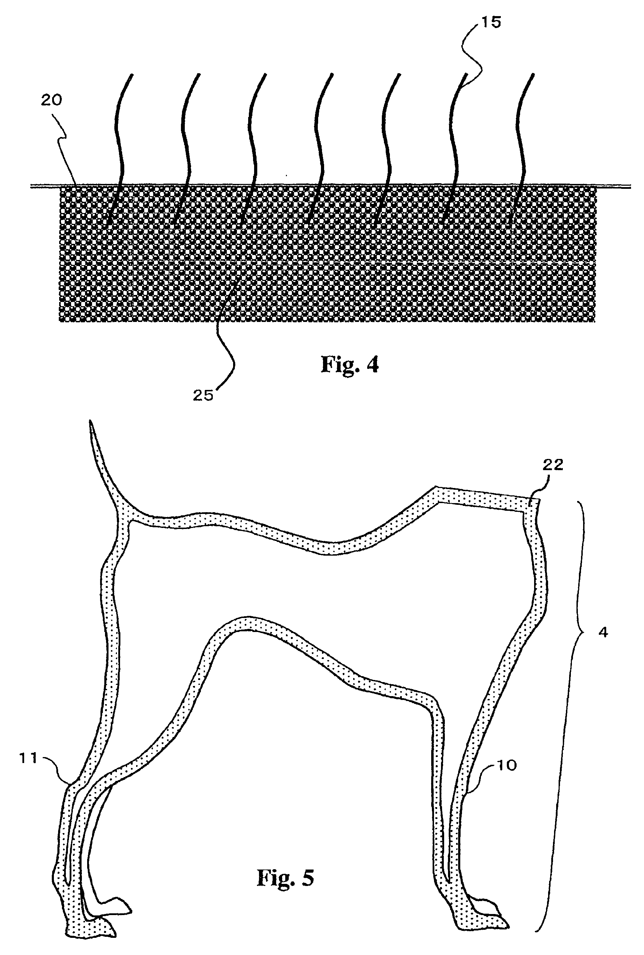

FIG. 4 is a sectional view showing the conditions that part of a rubber dog 1 is enlarged and woolen yarns 15 are flocked

In the flocking operation, the woolen yarns 15 are berried into the rubber dog 1 using a crochet needle for catching and burying the woolen yarns 15. At this time, the rubbery resin 20 is so soft that a woolen yarn needle may be stuck, and the chaff 25 is merely packed within the body and does not impair movement of a needle tip. The needle easily sticks. The woolen yarns caught on the crochet needle are disengaged from the crochet needle, and only the crochet needle is pulled out for flocking. In this manner, anybody is able to carry out the flocking operation using a needle easily. It is necessary for the flocking operation to pay attention to density or direction of flocked wool in order to imitate the body hair of a pet.

Upon completion of flocking operation, the packed chaff is pulled out of the rubber dog.

Since the rubbery resin 20 of the rubber dog 1 from which chaff is pulled out is soft and the inside of the body of a dog molded into a pet model is vacant, the buried woolen yarns in that condition become easily disengaged. In order to lock the woolen yarns 15 planted into the rubber dog 1, it is necessary to take a measure for adhering the woolen yarns 15 to the rubbery resin 20.

In the present invention, in the adhesion of the woolen yarns and the molding of the body, the woolen yarns 15 greatly swollen within the body of the rubber dog 1 after being injected into the rubber dog 1 are adhesively fixed to the rubbery resin 20, and a gluey hot charge 22 is used, which is comprised of synthetic resin or the like to be a constructional body of the body. The woolen yarns 15 flocked by the measure for injecting the gluey hot charge 22 are firmly fixedly mounted on the rubber dog 1. Further, a dog's natural shape in line with the shape of the rubber dog 1 can be formed.

FIG. 5 is a sectional view of a dog molded by injecting a gluey hot charge 22 into the trunk portion 4 of a rubber dog

The detailed injecting operation in the present embodiment is as follows: First, an injecting port of an injecting spray gun for the gluey hot charge 22 is inserted into a leg 10. Then, an adequate fixed quantity of the gluey hot charge is injected into the leg 10. The adequate quantity termed herein is a quantity that the rubbery resin 20 of the leg 10 becomes hard so as to remain its shape. When injection relative to four legs 10, 11 is completed, the trunk portion 4 and the head portion 2 are similarly subjected to injection. During the operation of this step, a slight quantity of the gluey hot charge 22 becomes swollen quickly to cover the space internally of the rubber dog 1 with fixed thickness.

After injection, the gluey hot charge 22 inflated along the rubbery resin 20 internally of the rubber dog 1 is changed from liqueous to hard solid article. This is then formed into a very natural dog's shape. For this measure, attention need be paid to an injection quantity of the gluey hot charge 22. If the quantity of the gluey hot charge 22 to be injected is too much, the gluey hot charge 22 oozes out from holes of the flocked woolen yarns 14 so that even the external woolen yarns 15 flocked become hard. Accordingly, it is necessary to sufficiently control the injection quantity of the gluey hot charge 22.

Since the head portion 2 and the trunk portion 4 of a dog are molded individually by different molds, it is necessary to accurately bond and assemble the head portion 2 and the trunk portion 4 in order to provide a dog's shape. Prior to adhesion, the gluey resin swollen outside the joining portion 3 between the head portion 2 and the trunk portion 4 into burr or the like is shaved off to make it clean. It is noted that the joining condition of the joining portion 3 between the head portion 2 and the trunk portion 4 is adjusted in advance prior to adhesion, the joining can be made simply. Finally, an adhesive such as "502" is coated on joint edges of the joining portion to firmly and strongly adhere the head portion 2 and the trunk portion 4.

Now, molding of a body hair of a dog will be explained.

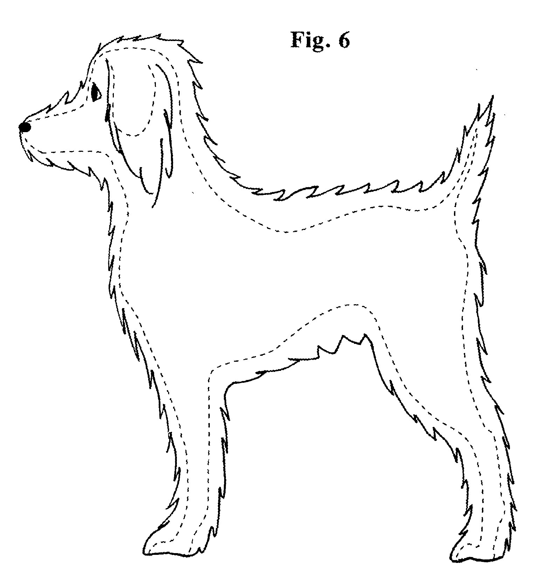

FIG. 6 shows a view of a practicing pet model in which flocked woolen yarns are molded.

The woolen yarns 15 flocked and twisted with respect to the body 1 are severed so as to be divided into three or four parts in accordance with the standard. Normally, this process is carefully carried out in order from bottom to top. By this processing, the woolen yarns 15 are arranged so as to have a likeness to a thickness of the body hair of a dog.

Then, brushing of the woolen yarns is carefully carried out from top to bottom, and from inside to outside using a brush for hair. This is done for the purpose of making it look like real dog's hair.

Further, in molding a dog's tail, woolen yarns are sewn so as to be planted on cloth, and the cloth is wound on the tail 9 portion of a dog, after which it is sewn by a needle. Then, the woolen yarns 15 are made to look like the hair of a dog similarly to that mentioned above, after which brushing is carried out to arrange the body hair.

In the present invention, there is provided a manufacturing method comprising: molding the body of a pet model of a dog or the like with soft resin, putting chaff into the soft body to fix the form and to flock, and thereafter hardening the body from the inside thereof with an adhesive such as glue to arrange it into a shape of a pet, thereby enabling the provision of a pet model which is easy in flocking operation and easy in manufacture.

### INDUSTRIAL APPLICABILITY

The present invention relates to a method for manufacturing a pet model for practicing trimming, which can be used as a practicing bed for shearing hair of a pet by an expert called a trimmer whose occupation is to shear hair of a pet such as a dog to arrange its shape, or a trainee aimed at a trimmer.

## Claims

1. A method for manufacturing a pet model for practicing trimming, in a pet model in which a body hair is flocked on the pet model body formed by pouring dissolved synthetic resin into a mold,
said body being constituted by a head portion and the trunk body including four legs, the method including the steps of:
pouring said dissolved synthetic resin into a mold to mold it; packing chaff such as grain into said molded body to fix a shape; flocking said body hair on said body with a crochet needle;
pulling out said chaff within the body after said flocking;
injecting a hot charge having adhesive properties formed of gluey resin or the like having expansion properties into said body; and assembling said head portion and said trunk portion to join them, **characterized in that** said flocked body hair is adhered to the body firmly from inside of the body, and said injected adhesive is expanded and coagulated to thereby form the constructional body of said body and to form the same type of a pet model as the mold.

2. The method for manufacturing a pet model for practicing trimming according to Claim 1, wherein in molding said body, the head portion and the trunk portion are molded separately.

3. The method for manufacturing a pet model for practicing trimming according to Claim 1, wherein the synthetic resin for molding said body is a synthetic resin such as polyvinyl chloride.

4. The method for manufacturing a pet model for practicing trimming according to Claim 3, wherein the synthetic resin for forming said body is heated at a high temperature with a gluey synthetic resin material formed from polyvinyl chloride thereby being hardened to be rubbery.

5. The method for manufacturing a pet model for practicing trimming according to Claim 1, wherein said chaff of grain to be packed into the body to make carrying out said flocking step easy are husks of grain such as rice, wheat, buckwheat and the like.

6. The method for manufacturing a pet model for practicing trimming according to Claim 1, wherein said body hair of a pet to be flocked is a twisted woolen yarn having a fixed length.

7. The method for manufacturing a pet model for practicing trimming according to Claim 1, wherein after said flocking, a gluey hot charge having adhesive properties injected into the body is expanded after injection to fill the interior of the body, and is hardened to form a constructional body of said body.
